# EUROPEAN PATENT SPECIFICATION

(11) **EP 4 088 137 B1**
(45) Date of publication and mention of the grant of the patent: **11.03.2026**
(21) Application number: 21702355.5
(22) Date of filing: 07.01.2021
(51) Int. Cl.: G01S 7/481, G01S 7/4863, G01S 17/66, G01S 17/894

(54) **LIDAR SYSTEM INCLUDING SCANNING FIELD OF ILLUMINATION**
LIDAR-SYSTEM MIT BELEUCHTUNGSABTASTFELD
SYSTÈME LIDAR COMPRENANT UN CHAMP DE BALAYAGE D'ÉCLAIREMENT

(30) Priority: 07.01.2020 US 202016735787
(43) Date of publication of application: 16.11.2022
(73) Proprietor: AUMOVIO Autonomous Mobility US, LLC, Auburn Hills, Michigan 48326 (US)
(72) Inventor: SMITH, Elliot, Auburn Hills, Michigan 48326 (US); MASUR, Jan Michael, Auburn Hills, Michigan 48326 (US); MEHR, Wilfried, Auburn Hills, Michigan 48326 (US)
(74) Representative: Isarpatent
(86) International application number: PCT/US2021/070009
(87) International publication number: WO 2021/142487

(56) References cited:
- US-A1- 2006 103 927
- US-A1- 2008 278 715
- US-A1- 2012 249 999
- US-A1- 2015 378 023
- US-A1- 2019 271 769

## Description

### BACKGROUND

A solid-state Lidar system includes a photodetector, or an array of photodetectors, essentially fixed in place relative to a carrier, e.g., a vehicle. Light is emitted into the field of view of the photodetector and the photodetector detects light that is reflected by an object in the field of view. For example, a Flash Lidar system emits pulses of light, e.g., laser light, into essentially the entire field of view. The time of flight of the reflected photon detected by the photodetector is used to determine the distance of the object that reflected the light.

As an example, the solid-state Lidar system may be mounted on a vehicle to detect objects in the environment surrounding the vehicle and to detect distances of those objects for environmental mapping. The detection of reflected light is used to generate a 3D environmental map of the surrounding environment. The output of the solid-state Lidar system may be used, for example, to autonomously or semi-autonomously control operation of the vehicle, e.g., propulsion, braking, steering, etc. Specifically, the system may be a component of or in communication with an advanced driver-assistance system (ADAS) of the vehicle.

US 2012/249999 A1 discloses an embodiment as acquisition and tracking system for a target or in another embodiment the system is used as a collision avoidance or navigation system with respect to the target. The tracking system rapidly scans light to find an object/target of interest within a time of concern. If a 2-D sensor acquires a target, the 2-D camera transfers the two-dimensional x,y coordinate position of the target to the scanning mirror system which rapidly orients its mirror in coordinates x and y so that an emitted pulse of light will intersect the position of the target. The reflected light from the target is captured and focused on the focal plane array of the 3D sensor. The light pulse reflected from the target generates an electrical current in the detector pixel representative of the pulse shape generated by the pulse light source.

US 2015/378023 A1 discloses a system for optically scanning a surface. A light source emits light to a rotating mirror for directing a light beam to illuminate different sub-areas of the surface to be scanned. The mirror is movable rotating with respect to X- and Y-axis. A photodetector detects the pulse emitted by the light source as reference and generates a corresponding detection signal to be used as the start of time counting for a pulsed Time Of Flight system.

US 2019/271769 A1 discloses a surveying technology for scanning a surrounding environment to detect objects in the surrounding environment of a vehicle. A vibration suppression system for a LIDAR includes a processor to control a light source in a manner enabling light to vary over scans of a field of view. A rotating mirror deflects light from the light source in order to scan the field of view. A sensor detects reflections from objects in the field of view. The sensor may include an array of avalanche photodiodes.

US 2008/278715 A1 discloses scanning laser radars (LADARs) which have adjustable operational parameters to accommodate laser perimeter surveillance of a particular site. Its an object of that LADAR system to accommodate the security and perimeter terrain surveillance requirements of the different installation sites, in order to identify potential intruders by the LADAR system.

US 2006/103927 A1 discloses a vehicle object recognition which emits a plurality of laser beams throughout a predetermined angular range in each of vertical and horizontal directions from one vehicle to recognize an object in front of the vehicle on the basis of reflected waves thereof. A photodetector acts as light-receiving element that produces a voltage corresponding to the intensity of the reflected light.

### BRIEF DESCRIPTION OF THE DRAWINGS

Figure 1 is a perspective view of a vehicle having a Lidar system aimed forward at objects in a field of view.
Figure 2 is a perspective view of the vehicle of Figure 1 showing the field of view and an overlapping field of illumination at one position.
Figure 3 is a top view of the vehicle identifying the field of view.
Figure 4 is a perspective view of a vehicle having two Lidar systems each aimed forward at objects in the fields of view.
Figure 5 is a perspective view of the vehicle of Figure 4 showing the fields of view and two overlapping fields of illumination at one position.
Figure 6 is a top view of the vehicle identifying the field of view.
Figure 7 is a perspective view of one of the Lidar systems.
Figure 8 is a perspective view of another embodiment of the Lidar system.
Figure 9 is a perspective view of a light sensor.
Figure 9A is a magnified view of Figure 9 showing an array of photodetectors.
Figure 10 is a schematic view of the array of photodetectors with segments of the array corresponding to discrete positions of a field of illumination.
Figure 11A is a side view of a vehicle identifying a field of view and a field of illumination in a first discrete position.
Figure 11B is a schematic view of the array of photodetectors with a segment of the array identified as corresponding to the first discrete position of the field of illumination in Figure 11A.
Figure 12A is a side view of a vehicle identifying a field of view and a field of illumination in a second discrete position.
Figure 12B is a schematic view of the array of photodetectors with a segment of the array identified as corresponding to the second discrete position of the field of illumination in Figure 12A.
Figure 13A is a side view of a vehicle identifying a field of view and a field of illumination in an Nth discrete position.
Figure 13B is a schematic view of the array of photodetectors with a segment of the array identified as corresponding to the Nth discrete position of the field of illumination in Figure 13A.
Figure 14 is a schematic of the Lidar system.
Figure 15 is a method performed by the Lidar system.

### DETAILED DESCRIPTION

According to the invention a system and a method are disclosed as set out by claims 1 and 8, respectively.

With reference to the Figures, wherein like numerals indicate like parts throughout the several views, a Lidar system 10 (hereinafter referred to as the "system 10") includes an array 12 of photodetectors 14. The system 10 includes a beam-steering device 16 and a light emitter 18 aimed at the beam-steering device 16. The beam-steering device 16 is designed to aim light from the light emitter 18 into a field of illumination (hereinafter "FOI") positioned to be detected by a segment 20 of the array 12 of photodetectors 14. Each segment 20 is smaller than the array 12. The system 10 includes a computer 22 having a processor 24 and memory 26 storing instructions executable by the processor 24 to adjust the aim of the beam-steering device 16 to move the field of illumination relative to the array 12 of photodetectors 14.

Accordingly, the beam-steering device 16 scans the FOI to illuminate the FOV of the array 12 of photodetectors 14 in discrete segments 20, i.e., the segments 20 are individually distinct from each other. These discrete segments 20 can be combined into a single frame corresponding to the entire FOV of the array 12 of photodetectors 14. This results in increased design flexibility and efficiencies for the light emitter 18. For example, the light emitter 18 uses less power per flash and such light emitters are easier to produce and power. By aiming the light with the beam-steering device 16 at different segments 20 of the array 12 of photodetectors 14, a larger FOV may be illuminated with a smaller light emitter 18.

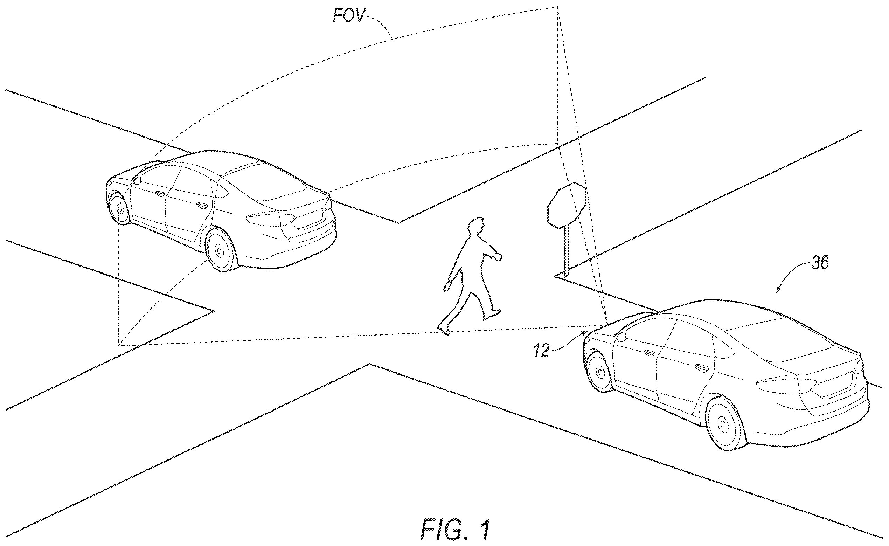

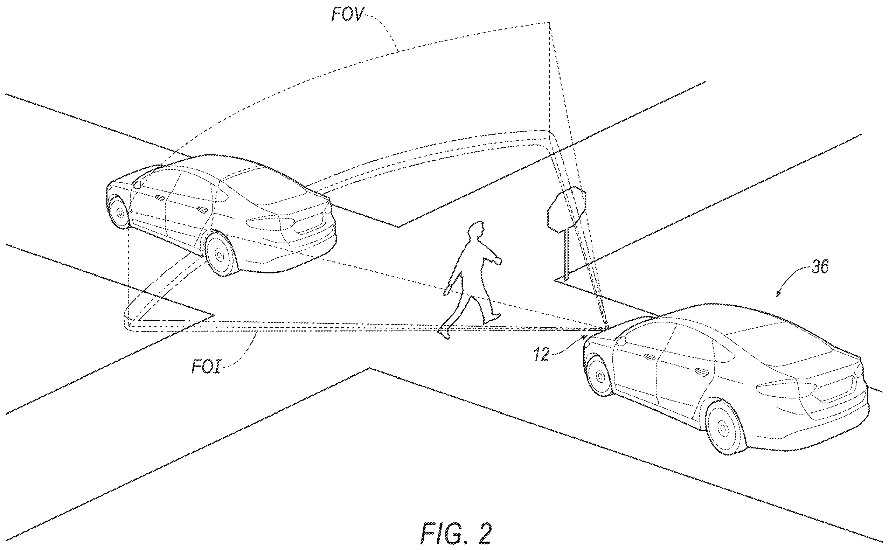

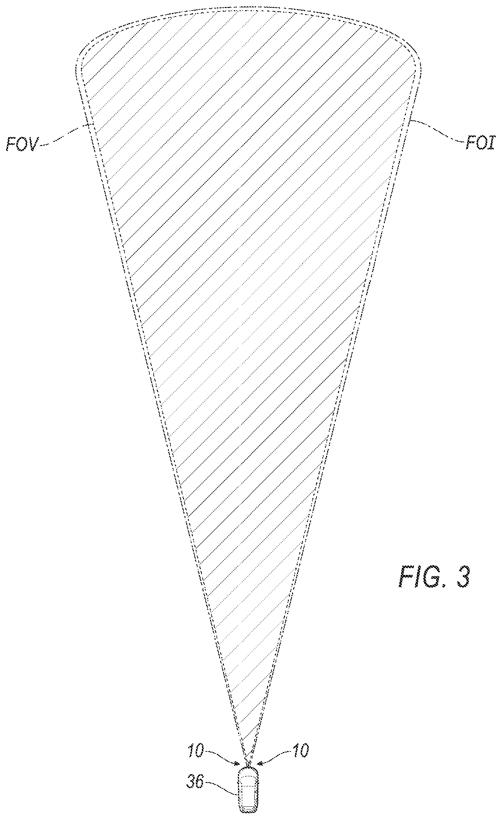

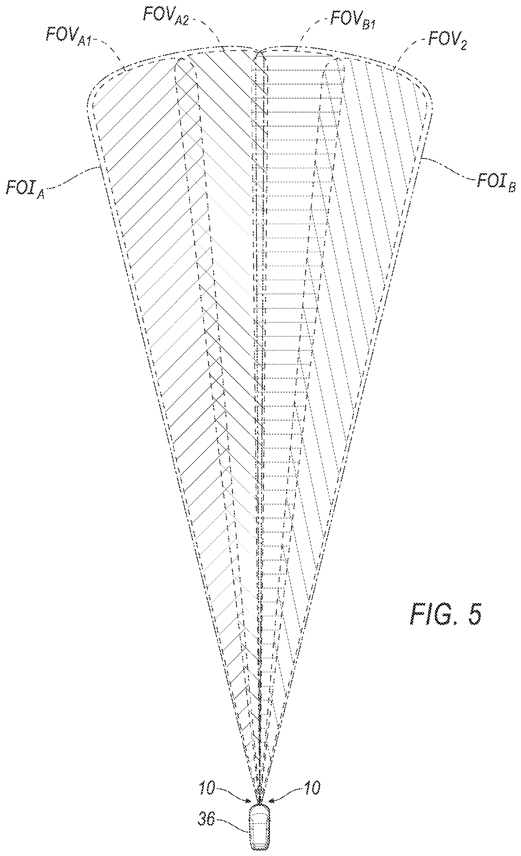

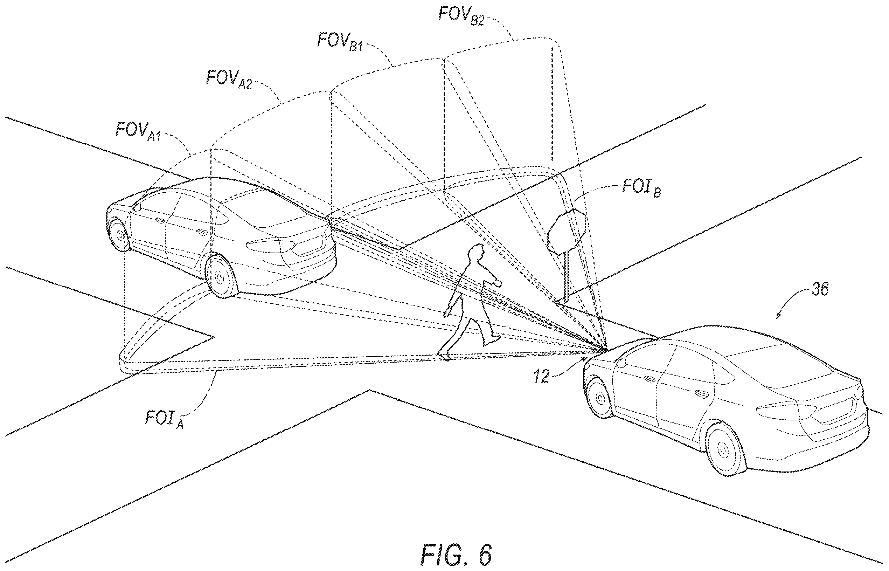

With reference to Figures 1-6, the Lidar system 10 emits light and detects the emitted light that is reflected by an object, e.g., pedestrians, street signs, vehicles, etc. Specifically, the system 10 includes a light-transmission system 28 and a light-receiving system 30. The light-transmission system 28 includes the light emitter 18 that emits light for illuminating objects for detection. The light-transmission system 28 includes an exit window 32 and includes the beam-steering device 16 and transmission optics, i.e., focusing optics, between the light emitter 18 and the exit window 32. The computer 22 is in communication with the light emitter 18 for controlling the emission of light from the light emitter 18 and the computer 22 is in communication with the beam-steering device 16 for aiming the emission of light from the Lidar system 10. The transmission optics shape the light from the light emitter 18 and guide the light through the exit window 32 to a field of illumination FOI.

The light-receiving system 30 has a field of view (hereinafter "FOV") that overlaps the field of illumination FOI and receives light reflected by objects in the FOV. The light-receiving system 30 may include receiving optics and a light sensor 11 having the array 12 of photodetectors 14. The light-receiving system 30 may include a receiving window 34 and the receiving optics may be between the receiving window 34 and the array 12 of photodetectors 14. The receiving optics may be of any suitable type and size.

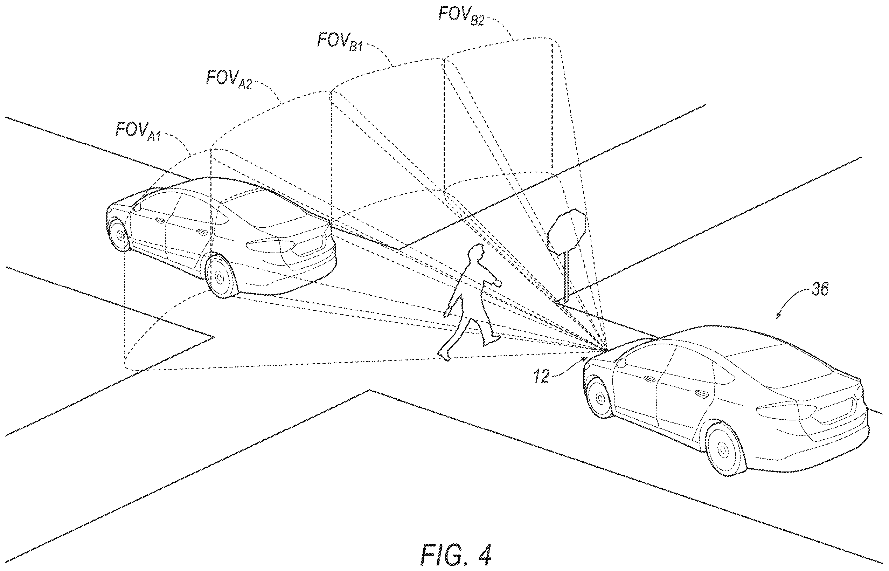

The Lidar system 10 is shown in Figures 1-6 as being mounted on a vehicle 36. In such an example, the Lidar system 10 is operated to detect objects in the environment surrounding the vehicle 36 and to detect distance, i.e., range, of those objects for environmental mapping. The output of the Lidar system 10 may be used, for example, to autonomously or semi-autonomously control operation of the vehicle 36, e.g., propulsion, braking, steering, etc. Specifically, the Lidar system 10 may be a component of or in communication with an advanced driver-assistance system (ADAS) of the vehicle 36. The Lidar system 10 may be mounted on the vehicle 36 in any suitable position and aimed in any suitable direction. As one example, the Lidar system 10 is shown on the front of the vehicle 36 and directed forward. The vehicle 36 may have more than one Lidar system 10 and/or the vehicle 36 may include other object detection systems, including other Lidar systems 10. The vehicle 36 is shown in Figure 1 as including one Lidar system 10 aimed in a forward direction merely as an example. As another example, the vehicle 36 is shown in Figure 4 as including two Lidar systems 10 each aimed in a forward direction. The vehicle 36 shown in the Figures is a passenger automobile. As other examples, the vehicle 36 may be of any suitable manned or un-manned type including a plane, satellite, drone, watercraft, etc.

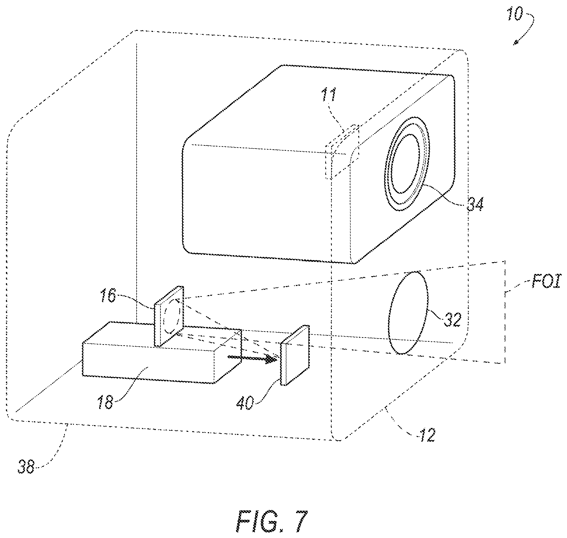

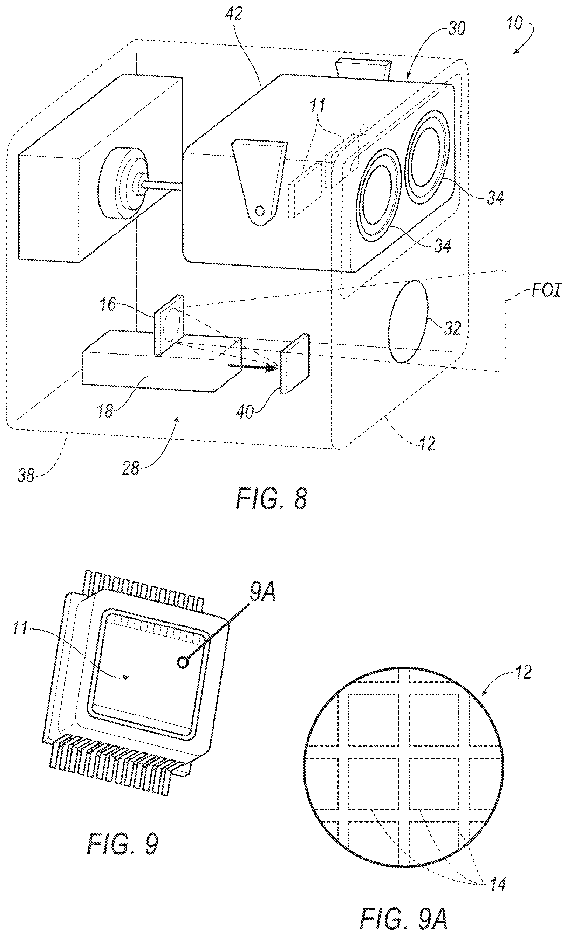

The Lidar system 10 may be a solid-state Lidar system. In such an example, the Lidar system 10 is stationary relative to the vehicle 36. For example, the Lidar system 10 may include a casing 38 (shown in Figs. 7 and 8 and described below) that is fixed relative to the vehicle 36, i.e., does not move relative to the component of the vehicle 36 to which the casing 38 is attached, and one or more chips, e.g., including silicon substrates, of the Lidar system 10 are supported in the casing 38.

As a solid-state Lidar system, the Lidar system 10 may be a flash Lidar system. In such an example, the Lidar system 10 emits pulses, i.e., flashes, of light into the field of illumination FOI. More specifically, the Lidar system 10 may be a 3D flash Lidar system that generates a 3D environmental map of the surrounding environment. In a flash Lidar system, the FOI illuminates a FOV that includes more than one photodetector 12, e.g., a 2D array 12, even if the illuminated 2D array 12 is not the entire 2D array 12 of the light sensor 11.

With reference to Figures 7-8, the Lidar system 10 may be a unit, i.e., the light-transmission system 28 and the light-receiving system 30 enclosed by the casing 38. The casing 38 may include mechanical attachment features to attach the casing 38 to the vehicle 36 and electronic connections to connect to and communicate with electronic system 10 of the vehicle 36, e.g., components of the ADAS. The exit window 32 and a receiving window 34 extends through the casing 38. The exit window 32 and the receiving window 34 each include an aperture extending through the casing 38 and may include a lens or other optical device in the aperture.

The casing 38, for example, may be plastic or metal and may protect the other components of the Lidar system 10 from moisture, environmental precipitation, dust, etc. In the alternative to the Lidar system 10 being a unit, components of the Lidar system 10, e.g., the light-transmission system 28 and the light-receiving system 30, may be separated and disposed at different locations of the vehicle 36.

As set forth above, the light-transmission system 28 includes the light emitter 18, the beam-steering device 16, and transmission optics. The light emitter 18 is aimed at the transmission optics. The transmission optics direct the light, e.g., in the casing 38 from the light emitter 18 to the exit window 32, and shapes the light. The transmission optics may include an optical element 40, a collimating lens, etc.

The optical element 40 shapes light that is emitted from the light emitter 18. Specifically, as described further below, the optical element 40 may be designed to shape the light from the light emitter 18 to be in a horizontally elongated pattern, i.e., such that the FOI is horizontally elongated. The light emitter 18 is aimed at the optical element 40, i.e., substantially all of the light emitted from the light emitter 18 reaches the optical element 40. As one example of shaping the light, the optical element 40 diffuses the light, i.e., spreads the light over a larger path and reduces the concentrated intensity of the light. In other words, the optical element 40 is designed to diffuse the light from the light emitter 18. As another example, the optical element 40 scatters the light, e.g., a hologram). "Unshaped light" is used herein to refer to light that is not shaped, e.g., not diffused or scattered, by the optical element 40, e.g., resulting from damage to the optical element 40. Light from the light emitter 18 may travel directly from the light emitter 18 to the optical element 40 or may interact with additional components between the light emitter 18 and the optical element 40. The shaped light from the optical element 40 may travel directly to the exit window 32 or may interact with additional components between the optical element 40 the exit window 32 before exiting the exit window 32 into the field of illumination FOI.

The optical element 40 directs the shaped light to the exit window 32 for illuminating the field of illumination FOI exterior to the Lidar system 10. In other words, the optical element 40 is designed to direct the shaped light to the exit window 32, i.e., is sized, shaped, positioned, and/or has optical characteristics to direct the shaped light to the exit window 32.

The optical element 40 may be of any suitable type that shapes and directs light from the light emitter 18 toward the exit window 32. For example, the optical element 40 may be or include a diffractive optical element, a diffractive diffuser, a refractive diffuser, a computer-generated hologram, a blazed grating, etc. The optical element 40 may be reflective or transmissive.

The light emitter 18 emits light into the field of illumination FOI for detection by the light-receiving system 30 when the light is reflected by an object in the field of view FOV. The light emitter 18 may be, for example, a laser. The light emitter 18 may be, for example, a semiconductor laser. In one example, the light emitter 18 is a vertical-cavity surface-emitting laser (VCSEL). As another example, the light emitter 18 may be a diode-pumped solid-state laser (DPSSL). As another example, the light emitter 18 may be an edge emitting laser diode. The light emitter 18 may be designed to emit a pulsed flash of light, e.g., a pulsed laser light. Specifically, the light emitter 18, e.g., the VCSEL or DPSSL or edge emitter, is designed to emit a pulsed laser light. The light emitted by the light emitter 18 may be, for example, infrared light. Alternatively, the light emitted by the light emitter 18 may be of any suitable wavelength. The Lidar system 10 may include any suitable number of light emitters 18, i.e., one or more in the casing 38. In examples that include more than one light emitter 18, the light emitters 18 may be identical or different.

As set forth above, the light emitter 18 is aimed at the optical element 40. Specifically, the light emitter 18 is aimed at a light-shaping surface of the optical element 40. The light emitter 18 may be aimed directly at the optical element 40 or may be aimed indirectly at the optical element 40 through intermediate components such as reflectors/deflectors, diffusers, optics, etc. The light emitter 18 is aimed at the beam-steering device 16 either directly or indirectly through intermediate components.

The light emitter 18 may be stationary relative to the casing 38, as shown in Figures 7 and 8. In other words, the light emitter 18 does not move relative to the casing 38 during operation of the system 10, e.g., during light emission. The light emitter 18 may be mounted to the casing 38 in any suitable fashion such that the light emitter 18 and the casing 38 move together as a unit.

The Lidar system 10 includes one or more cooling devices for cooling the light emitter 18. For example, the system 10 may include a heat sink on the casing 38 adjacent the light emitter 18. The heat sink may include, for example, a wall adjacent the light emitter 18 and fins extending away from the wall exterior to the casing 38 for dissipating heat away from the light emitter 18. The wall and/or fins, for example, may be material with relatively high heat conductivity. The light emitter 18 may, for example, abut the wall to encourage heat transfer. In addition or in the alternative, the fins, the system 10 may include additional cooling devices, e.g. thermal electric coolers (TEC).

The light-transmission system 28 is designed to emit light in a horizontally elongated pattern. In other words, the FOI is horizontally elongated. With reference to Figures 1-6, the FOI overlaps the entire width of the FOV in the horizontal direction. In other words, the FOI is as wide or wider than the FOV in the horizontal direction. The FOI is smaller than the FOV in the vertical direction. In other words, the FOI is positioned to be detected by a segment 20 (i.e., less than then whole) of the array 12 of photodetectors 14. As an example, the height of the FOI in the vertical direction may be 1/6 to 1/12 of the of the height of the FOV in the vertical direction, i.e., the FOI is positioned to be detected by 1/6 to 1/12 of the array 12 of photodetectors 14. "Positioned to be detected" means that, if an object is in the FOI, the object reflects light back to the segment 20 of the array 12 of photodetectors 14. As described below, the beam-steering device 16 moves the FOI vertically to discrete positions and light is emitted at each discrete position. Horizontal and vertical are used herein relative to gravity.

According to the invention the light-transmission system 28 is designed to emit light such that the FOI is horizontally elongated, by means of the transmission optics, namely the beam-steering device 16 and optionally the optical element 40 being designed to shape light from the light emitter 18 in a horizontally elongated pattern. As an example, the optical element 40 may be designed (i.e., sized, shaped, and having optical characteristics) to shape the light from the light emitter 18 such that the light exiting the exit window 32 is in a horizontally-elongated pattern. In addition or in the alternative to the design of the optical element 40, the beam-steering device 16 may be designed to direct the light from the light emitter 18 such that the light exiting the exit window 32 is in a horizontally-elongated pattern.

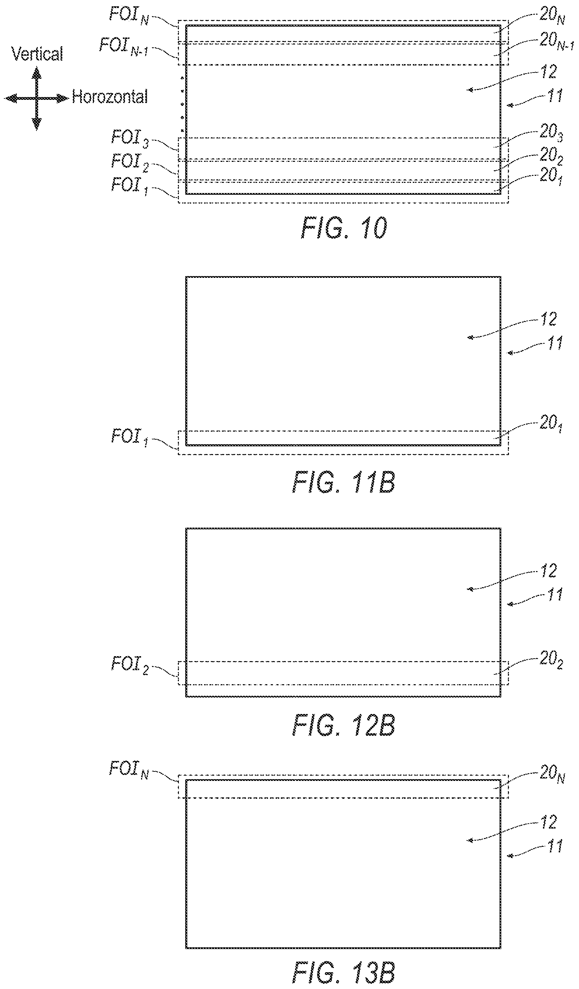

The beam-steering device 16 is designed to aim light from the light emitter 18 into the FOI positioned to be detected by a segment 20 of the array 12 of photodetectors 14. In other words, as set forth above, the FOI is smaller than the FOV in the vertical direction and the beam-steering device 16 aims the FOI into the FOV such that the FOI is positioned to be detected by a segment 20 of the array 12 of photodetectors 14, i.e., to detect light that is reflected by an object in the FOV. Figures 10, 11B, 12B, and 13B schematically show the aim of the FOI segments 20 of the array 12 of photodetectors 14, i.e., if an object is in the FOI, light reflected by the object is detected by the segment 20.

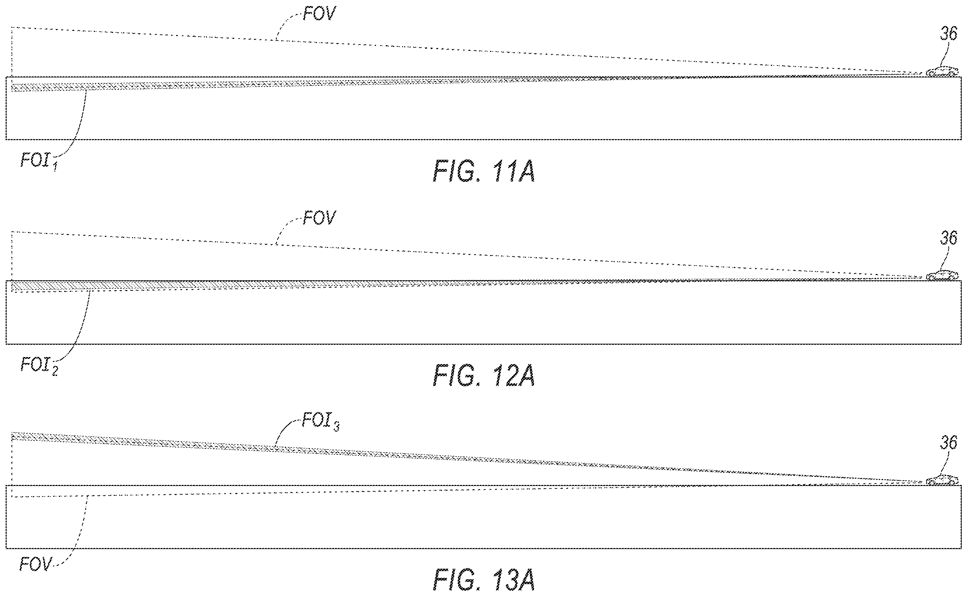

The beam-steering device 16 is designed to move the FOI vertically to discrete positions and light is emitted at each discrete position, as shown in Figures 11A, 12A, and 13A. The discrete positions are "discrete" in that the positions are individually distinct from each other. The discrete positions may overlap adjacent discrete positions. The discrete positions may be stopped positions or may be temporal, i.e., positions at different times. Said differently, as one example, the beam-steering device 16 may stop the vertical scan of the FOI at each discrete vertical position and light is emitted at each discrete vertical position. As another example, the beam-steering device 16 may continuously scan (i.e., without stopping) the FOI vertically and each discrete position is a different position of the scan at different times. The various discrete positions are distinguished with subscript in the Figures.

The beam-steering device 16 scans through a sequence of the discrete positions. For example, the position sequence may be a sequence of stopped positions or a sequence of times during a continuous scan, as described above. Each discrete position in the sequence may be adjacent or overlapping the previous discrete position and the following discrete position in the sequence. The light emitter 18 emits a flash of light at each discrete vertical position, i.e., light is not be emitted while moving to between discrete vertical positions. The discrete vertical positions are "discrete" in that vertical positions are individually distinct, i.e., different positions, however, the FOI of adjacent discrete vertical positions may overlap, as shown in Figure 10. The discrete positions, in combination, cover the entire FOV so that the scenes detected by the array 12 of photodetectors 14 at each discrete position can be combined into a frame including light detected in the entire FOV. Horizontal and vertical are used herein relative to gravity.

The beam-steering device 16 is designed to adjust the aim of the beam-steering device 16 to move the FOI relative to the array 12 of photodetectors 14. For example, when the beam-steering device 16 is aimed in the first discrete position, as shown in Figure 11A, the FOI is aimed at a first segment 20 of the array 12 of photodetectors 14, as shown schematically in Figure 11B. In other words, if light is reflected by an object in the FOI at the first discrete position, the reflected light is detected by the first segment 20 of the array 12 of photodetectors 14 Likewise, when the beam-steering device 16 is aimed at the second discrete position, as shown in Figure 12B, the FOI is aimed at a second segment 20 of the array 12 of photodetectors 14, as shown schematically in Figure 12A. Each photodetector 14 of the array 12 of photodetectors 14 is illuminated at least once in the combination of all discrete positions of the FOI. The scan of discrete positions has a range. The range may be 5 to 6 degrees. In an example in which the scan is 5.5 degrees and the beam-steering device 16 moves the aim of the FOI to 10 discrete positions, the beam-steering device 16 moves the aim of the FOI 0.55 degrees between each discrete position. The different positions of the FOI are identified with subscript in Figures 10-13B.

The beam-steering device 16 may include an micromirror array 12. For example, the beam-steering device 16 may be a micro-electro-mechanical system (MEMS) mirror array. As an example, the beam-steering device 16 may be a digital micromirror device (DMD) that includes an array of pixel-mirrors that are capable of being tilted to deflect light. As another example, the beam-steering device 16 may include a mirror on a gimbal that is tilted, e.g., by application of voltage. As another example, the beam-steering device 16 may be a liquid-crystal solid-state device including an array of pixels. In such examples, the beam-steering device 16 is designed to move the FOI vertically to discrete positions by adjusting the micromirror array or the array of pixels. In examples including micromirrors, the aim of the micromirrors may also be controlled to, at least in part, shape the light from the light emitter 18 in a horizontally elongated patter. In examples including pixels, the shape of light from the light emitter 18 may be shaped, at least in part, by aim of the pixels and/or turning some pixels on and turning some pixels off. As another example, the beam-steering device 16 may be a spatial light modulator or metamaterial with an array of pixels or continuous medium or may be a mirror placed within a set of voice coil technology used to steer the mirror.

As set forth above, the light-receiving system 30 includes the light sensor 11 including the array 12 of photodetectors 14, i.e., a photodetector array. The light sensor 11 includes a chip and the array 12 of photodetectors 14 is on the chip. The chip may be silicon (Si), indium gallium arsenide (InGaAs), germanium (Ge), etc., as is known. The chip and the photodetectors 14 are shown schematically in Figure 9A. The array 12 is 2-dimensional. Specifically, the array 12 of photodetectors 14 includes a plurality of photodetectors 14 arranged in a columns and rows. Each photodetector 14 is light sensitive. Specifically, each photodetector 14 detects photons by photoexcitation of electric carriers. An output signal from the photodetector 14 indicates detection of light and may be proportional to the amount of detected light. The output signals of each photodetector 14 are collected to generate a scene detected by the photodetector 14. The photodetectors 14 may be of any suitable type, e.g., photodiodes (i.e., a semiconductor device having a p-n junction or a p-i-n junction) including avalanche photodiodes, metal-semiconductor-metal photodetectors 14, phototransistors, photoconductive detectors, phototubes, photomultipliers, etc. As an example, the photodetectors 14 may each be a silicon photomultiplier (SiPM). As another example, the photodetectors 14 may each be or a PIN diode. Each photodetector 14 may also be referred to as a pixel.

In some examples, each photodetector 14 of the array 12 of photodetectors 14 remains operational at all discrete positions of the FOI. In such examples, in the event light is detected by a photodetector 14 outside of the segment 20 of the array 12 of photodetectors 14 at which the FOI is aimed, such a detection may be an indication that the Lidar system 10 is damaged or has detected light from a different source than the light emitter 18. In such an event, the Lidar system 10 may output a fault indication in response to such a detection and/or may discard the data so that the data is not used by the ADAS. In other examples, the array 12 of photodetectors 14 may be operated such that only the segment 20 of the array 12 at which the FOI is aimed are operational to increase lifespan of the array 12 of photodetectors 14 and/or to reduce the amount of memory and reduce the amount of output bandwidth to a central processing unit.

In some examples, such as the example in Figures 4-6, the light-receiving system 30 may include more than one array 12 of photodetectors 14, e.g., more than one light sensor 11 with each light sensor 11 having its own array 12 of photodetectors 14. In such examples, the light-transmission system 28 may illuminate the FOV of each array 12 of photodetectors 14. Specifically, more than one array 12 of photodetectors 14 may be supported in the casing 38 and one light-transmission system 28, also supported in the casing 38, illuminates the FOV of each array 12 of photodetectors 14. In the example shown in Figures 4-6, the light-receiving system 30 includes two arrays 12 of photodetectors 14, namely a first array and a second array. The first array and the second array are aimed in different directions, i.e., the FOVs are not identical. As shown in the figures, the FOVs may overlap. As set forth above, the example in Figures 4-6 has two Lidar systems 10, and each Lidar system includes two arrays 12 of photodetectors 14. One of the light emitters emits FOI_{A} with the corresponding arrays 12 having fields of view FOV_{A1} and FOV_{A2}. Similarly, the other light emitter emits FOI_{B} with corresponding arrays 12 having fields of view FOV_{B1} and FOV_{B2}.

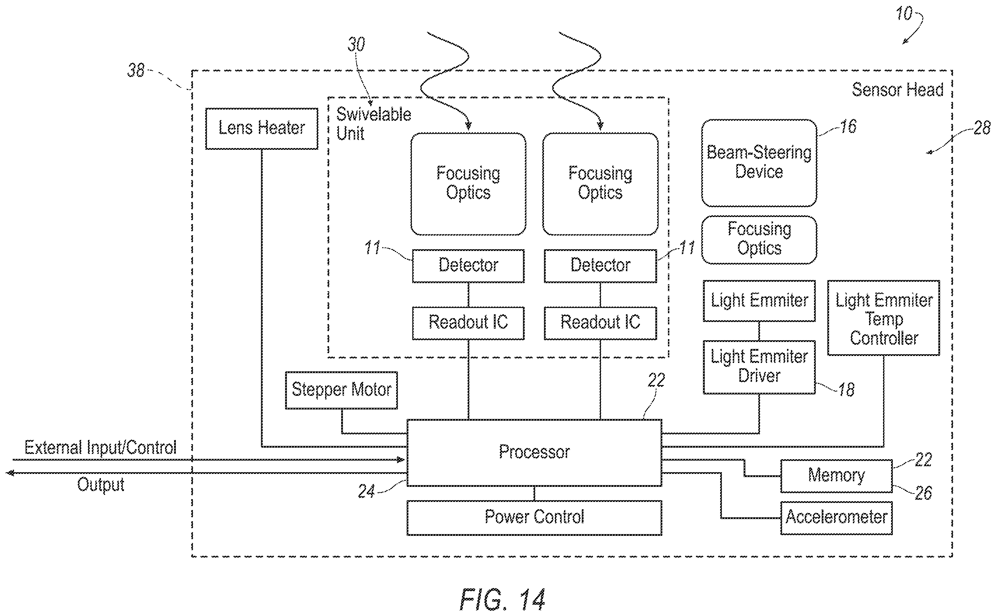

In some examples, such as the example shown in Figure 8, the light-receiving system 30 may be adjustably aimed to accommodate for changes in ride-height and/or angle of the vehicle 36 caused by, for example, varying weight, location, and/or age of occupants, varying weight and/or location of cargo, changes in an active-suspension system of the vehicle 36, changes in an active-ride-handling system of the vehicle 36, etc. In the example shown in Figure 8, the Lidar system 10 may include a housing 42 rotatably supported by the casing 38. The housing 42 supports the components of the light-receiving system 30 and the housing 42 may be rotated relative to the casing 38, e.g., with the use of a motor (e.g., the stepper motor in Fig. 14), to vertically adjust the aim of the FOV. In such examples, when the FOV is vertically adjusted, the beam-steering device 16 may move the FOI accordingly, i.e., may adjust each discrete position by the same adjustment.

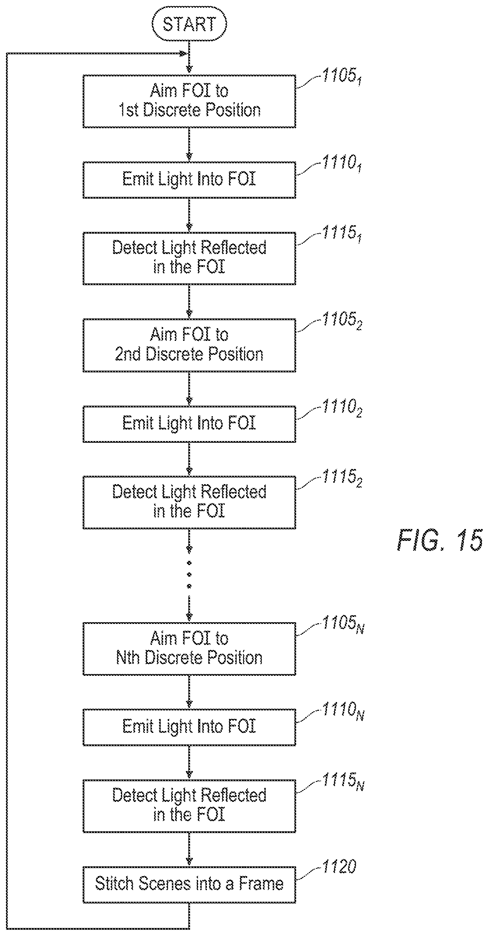

The computer 22 may be a microprocessor-based controller or field programmable gate array (FPGA), or a combination of both, implemented via circuits, chips, and/or other electronic components. In other words, the computer 22 is a physical, i.e., structural, component of the system 10. With reference to Figure 14, the computer 22 includes the processor 24, memory 26, etc. The memory 26 of the computer 22 may store instructions executable by the processor 24, i.e., processor-executable instructions, and/or may store data. The computer 22 may be in communication with a communication network of the vehicle 36 to send and/or receive instructions from the vehicle 36, e.g., components of the ADAS. The instructions stored on the memory 26 of the computer 22 include instructions to perform the method in Figure 15. Use herein (including with reference to the method in Figure 15) of "based on," "in response to," and "upon determining," indicates a causal relationship, not merely a temporal relationship.

With reference to Figure 15, the memory 26 stores instructions executable by the processor 24 to adjust the aim of the beam-steering device 16 to move the FOI relative to the array 12 of photodetectors 14. Specifically, the memory 26 stores instructions to adjust the aim of the beam-steering device 16 in the sequence of discrete positions and to emit light from the light emitter 18 at each discrete position. As set forth above, the field of illumination is positioned to be detected by different segments 20 of the array 12 of photodetectors 14 at each discrete position. The respective segment 20 of the array 12 of photodetectors 14 detects light reflected in the FOI. The memory 26 stores instructions to cycle through the sequence of discrete positions, emit light at each discrete position, and detect reflected light at each discrete position, i.e., detect the scene. In Figures 10-13B, the sequence includes N number of positions of which a first discrete position, second discrete position, an N-1 discrete position, and the N discrete position are shown in the Figures. The first discrete position, second discrete position, N-1 discrete position, and N discrete position correspond to FOI₁, FOI₂, FOI_{N-1}, and FOI_{N}, respectively, in Figures 10-13B. The memory 26 stores instructions to stitch together scenes from adjacent ones of the segments 20 to form a frame. The frame is used to create a 3D environmental map and/or is output, e.g., to the ADAS.

With reference to block 1105₁ of Figure 15, the memory 26 stores instructions to adjust the aim of the beam-steering device 16 in the sequence by controlling operation of the beam-steering device 16 as described above. Specifically, the memory 26 stores instructions to, in some embodiments, control the position of the micromirrors of the beam-steering device 16, and in some embodiments, control the pixels of the beam-steering device 16. The memory 26 stores instructions to adjust the aim of the beam-steering device 16 vertically, as described above. As shown in Figure 15, the memory 26 stores instructions to adjust the aim of the beam-steering device 16 in the sequence, as identified by blocks 1105₂, 1105_{N-1}, and 1105_{N}. As set forth above, when the beam-steering device 16 is aimed in the first discrete position, as shown in Figure 11A, the FOI is aimed at a first segment 20 of the array 12 of photodetectors 14, as shown schematically in Figure 11B. Likewise, when the beam-steering device 16 is aimed at the second discrete position, as shown in Figure 12A, the FOI is aimed at a second segment 20 of the array 12 of photodetectors 14, as shown schematically in Figure 12B.

With reference to blocks 1110₁, 1110₂, 1110_{N-1}, and 1110_{N} of Figure 15, the memory 26 stores instructions to emit light from the light emitter 18 by controlling the operation of the light emitter 18 as described above. Specifically, the memory 26 stores instructions to power the light emitter 18, e.g., the laser. In other words, the memory 26 stores instructions to first adjust the aim of the beam-steering device 16 and subsequently power the light emitter 18.

With reference to blocks 1115₁, 1115₂, 1115_{N-1}, and 1115_{N} of Figure 15, the memory 26 stores instructions to detect light reflected in the FOI with a segment 20 of the array 12 of photodetectors 14. "Detecting" light may include detecting intensity and range. The memory 26 may store instructions to operate the array 12 of photodetectors 14 as described above. As one example, the memory 26 stores instructions to, at each discrete position of the sequence of discrete positions, operate the segment 20 of the array 12 of photodetectors 14 for which the field of illumination is positioned to be detected by and to disable the remaining photodetectors 14 of the array 12. In such examples, the memory 26 stores instructions to, in response to detection of light by the photodetector 14 outside of the segment 20 of the array 12 of photodetectors 14 at which the FOI is aimed, indicate that the Lidar system 10 is damaged or has detected light from a different source than the light emitter 18. Specifically, the memory 26 may store instructions to output a fault indication in response to such a detection and/or to discard the data so that the data is not used by the ADAS. In other examples, the memory 26 may store instructions to operate each photodetector 14 of the array 12 of photodetectors 14.

The detection of light at each discrete position forms a scene at that position. With reference to block 1120, the memory 26 stores instructions to stitch the scenes together to form a frame. The scenes may be stitched with any suitable software, method, etc. When stitched, overlapping portions of adjacent scenes may be merged or discarded to create continuity in the frame.

After the beam-steering device 16 is aimed at the final discrete position, i.e., N discrete position in Figures 10-13B, the memory 26 stores instructions to repeat adjustment of the beam-steering device 16 to another sequence of discrete positions. This next sequence of discrete positions may be the same as the previous, as shown in Figure 15. In other words, the memory 26 may store instructions to adjust the beam-steering device 16 back to the first discrete position (corresponding to FOI₁ in Figures 10-11B). As another example, the memory 26 may store instructions to reverse the sequence, i.e., adjust the aim of the beam-steering device 16 from N discrete position (corresponding to FOI_{N}) back to N-1 discrete position (corresponding to FOI_{N-1}) and go backwards through the previous sequence.

## Claims

1. A system comprising:
an array (12) of photodetectors (14);
a beam-steering device (16);
a light emitter (18) aimed at the beam-steering device (16), wherein the beam-steering device (16) being designed to aim light from the light emitter (18) into a field of illumination (FOI) positioned to be detected by a segment (20) of the array (12) of photodetectors (14), the segment (20) being smaller than the array (12); and
a computer (22) having a processor (24) and memory (26) storing instructions executable by the processor (24) to adjust the aim of the beam-steering device (16) to move the field of illumination (FOI) relative to the array (12) of photodetectors (14),
wherein the memory (26) stores instructions executable by the processor (24) to adjust the aim of the beam-steering device (16) in a sequence of discrete positions and to emit light from the light emitter (18) at each discrete position, the field of illumination (FOI) being positioned to be detected by different segments (20) of the array (12) of photodetectors (14) at each discrete position and **characterized in that** the beam-steering device (16) is designed to shape light from the light emitter (18) in a horizontally elongated pattern, wherein the segments (20) are elongated horizontally and the discrete positions in the sequence of discrete positions are arranged vertically.

2. The system as set forth in claim 1, wherein the memory (26) stores instructions executable by the processor (24) to adjust the aim of the beam-steering device (16) so that the field of illumination (FOI) is positioned to be detected by each photodetector (14) at least once in the sequence.

3. The system as set forth in claim 1, wherein adjacent ones of the segments (20) overlap.

4. The system as set forth in claim 2, wherein each segment (20) detects a scene of light reflected in the field of illumination (FOI) and scenes from adjacent ones of the segments (20) are stitched together to form a frame.

5. The system as set forth in claim 1, wherein the memory (26) stores instructions executable by the processor (24) to, at each discrete position of the sequence of discrete positions, operate the segment (20) of the array (12) of photodetectors (14) for which the field of illumination (FOI) is positioned to be detected by and to disable the remaining photodetectors (14) of the array (12).

6. The system as set forth in claim 1, wherein the array (12) is a first array (12) and the system further comprising a second array (12) of photodetectors (14), wherein the first array (12) and the second array (12) are aimed in different directions, the field of illumination (FOI) positioned to be detected by a segment (20) of the second array (12) of photodetectors (14).

7. The system as set forth in claim 1, wherein the beam-steering device (16) includes a micro-electric-mechanical mirror and/or a liquid crystal display.

8. A method comprising:
generating light with a light emitter (18);
aiming light from the light emitter (18) into a field of illumination (FOI) positioned to be detected by a first segment (20) of an array (12) of photodetectors (14) of a photodetector (14), the first segment (20) being smaller than the array (12);
detecting light reflected in the field of illumination (FOI) with the photodetectors (14) in the first segment (20) of the array (12) of photodetectors (14);
adjusting the aim of the light from the light emitter (18) to move the field of illumination (FOI) to be positioned to be detected by a second segment (20) of the array (12) of photodetectors (14), the second segment (20) being smaller than the array (12);
detecting light reflected in the field of illumination (FOI) with the photodetectors (14) in the second segment (20) of the array (12) of photodetectors (14); and
adjusting the aim of the light from the light emitter (18) in a sequence of discrete positions and emitting light from the light emitter (18) at each discrete position, the field of illumination (FOI) being positioned to be detected by different segments (20) of the array (12) of photodetectors (14) at each discrete position,
**characterized by** shaping the light from the light emitter by means of a beam-steering device (16) (18) in a horizontally elongated pattern, wherein the segments (20) are elongated horizontally and the discrete positions in the sequence of discrete positions are arranged vertically.

9. The method as set forth in claim 8, further comprising adjusting the aim of the light from the light emitter (18) so that the field of illumination (FOI) is positioned to be detected by each photodetector (14) at least once in the sequence.

10. The method as set forth in claim 8, further comprising detecting a scene of light reflected in the field of illumination (FOI) with each segment (20) and stitching together the scenes from adjacent ones of the segments (20) to form a frame.

11. The method as set forth in claim 8, further comprising aiming the field of illumination (FOI) to be elongated horizontally and adjusting the field of illumination (FOI) vertically.

12. The method as set forth in claim 8, further comprising overlapping the first segment (20) and second segment (20).

13. The method as set forth in claim 8, further comprising stitching together a scene detected by the first segment (20) of the array (12) of photodetectors (14) with a scene detected by the second segment (20) of the array (12) of photodetectors (14) to form a frame.

14. The method as set forth in claim 8, further comprising operating the first segment of the array of photodetectors and disabling the second segment of the array of photodetectors when light from the light emitter is emitted into a field of illumination positioned to be detected by a first segment of an array of photodetectors.

## Patentansprüche

1. System, umfassend:
eine Anordnung (12) von Fotodetektoren (14);
eine Strahllenkungsvorrichtung (16);
einen Lichtemitter (18), der auf die Strahllenkungsvorrichtung (16) gerichtet ist, wobei die Strahllenkungsvorrichtung (16) dafür ausgelegt ist, Licht von dem Lichtemitter (18) in ein Beleuchtungsfeld (Field of Illumination, FOI) hinein zu richten, das so positioniert ist, dass es durch ein Segment (20) der Anordnung (12) von Fotodetektoren (14) detektiert wird, wobei das Segment (20) kleiner als die Anordnung (12) ist; und
einen Computer (22), aufweisend einen Prozessor (24) und einen Speicher (26), der Instruktionen speichert, die durch den Prozessor (24) ausführbar sind, um das Richten der Strahllenkungsvorrichtung (16) so einzustellen, dass das Beleuchtungsfeld (FOI) relativ zu der Anordnung (12) von Fotodetektoren (14) bewegt wird,
wobei der Speicher (26) Instruktionen speichert, die durch den Prozessor (24) ausführbar sind, um das Richten der Strahllenkungsvorrichtung (16) in einer Sequenz von diskreten Positionen einzustellen und Licht von dem Lichtemitter (18) an jeder diskreten Position zu emittieren, wobei das Beleuchtungsfeld (FOI) so positioniert ist, dass es durch verschiedene Segmente (20) der Anordnung (12) von Fotodetektoren (14) an jeder diskreten Position detektiert werden kann, und **dadurch gekennzeichnet, dass** die Strahllenkungsvorrichtung (16) dafür ausgelegt ist, Licht von dem Lichtemitter (18) in einem horizontal länglichen Muster zu formen, wobei die Segmente (20) horizontal länglich sind und die diskreten Positionen in der Sequenz von diskreten Positionen vertikal angeordnet sind.

2. System nach Anspruch 1, wobei der Speicher (26) Instruktionen speichert, die durch den Prozessor (24) ausführbar sind, um das Richten der Strahllenkungsvorrichtung (16) so einzustellen, dass das Beleuchtungsfeld (FOI) so positioniert ist, dass es durch jeden Fotodetektor (14) mindestens einmal in der Sequenz detektiert wird.

3. System nach Anspruch 1, wobei sich benachbarte der Segmente (20) überlappen.

4. System nach Anspruch 2, wobei jedes Segment (20) eine Szene von in dem Beleuchtungsfeld (FOI) reflektierten Licht detektiert und Szenen aus benachbarten der Segmente (20) zusammengefügt werden, um ein Vollbild zu bilden.

5. System nach Anspruch 1, wobei der Speicher (26) Instruktionen speichert, die durch den Prozessor (24) ausführbar sind, um an jeder diskreten Position der Sequenz von diskreten Positionen das Segment (20) der Anordnung (12) von Fotodetektoren (14) zu aktivieren, für das das Beleuchtungsfeld (FOI) so positioniert ist, dass es durch dieses detektiert wird, und die übrigen Fotodetektoren (14) der Anordnung (12) zu deaktivieren.

6. System nach Anspruch 1, wobei die Anordnung (12) eine erste Anordnung (12) ist und das System des Weiteren eine zweite Anordnung (12) von Fotodetektoren (14) umfasst, wobei die erste Anordnung (12) und die zweite Anordnung (12) in verschiedene Richtungen gerichtet sind, wobei das Beleuchtungsfeld (FOI) so positioniert ist, dass es durch ein Segment (20) der zweiten Anordnung (12) von Fotodetektoren (14) detektiert wird.

7. System nach Anspruch 1, wobei die Strahllenkungsvorrichtung (16) einen mikroelektromechanischen Spiegel und/oder eine Flüssigkristallanzeige aufweist.

8. Verfahren, umfassend:
Generieren von Licht mit einem Lichtemitter (18);
Richten von Licht von dem Lichtemitter (18) in ein Beleuchtungsfeld (FOI), das so positioniert ist, dass es durch ein erstes Segment (20) einer Anordnung (12) von Fotodetektoren (14) eines Fotodetektors (14) detektiert wird, wobei das erste Segment (20) kleiner als die Anordnung (12) ist;
Detektieren von Licht, das in dem Beleuchtungsfeld (FOI) reflektiert wird, mit den Fotodetektoren (14) in dem ersten Segment (20) der Anordnung (12) von Fotodetektoren (14);
Einstellen des Richtens des Lichts von dem Lichtemitter (18), um das Beleuchtungsfeld (FOI) so zu bewegen, dass es so positioniert ist, dass es durch ein zweites Segment (20) der Anordnung von Fotodetektoren (14) detektiert wird, wobei das zweite Segment (20) kleiner als die Anordnung (12) ist;
Detektieren von Licht, das in dem Beleuchtungsfeld (FOI) reflektiert wird, mit den Fotodetektoren (14) in dem zweiten Segment (20) der Anordnung (12) von Fotodetektoren (14); und
Einstellen des Richtens des Lichts von dem Lichtemitter (18) in einer Sequenz von diskreten Positionen und Emittieren von Licht von dem Lichtemitter (18) an jeder diskreten Position, wobei das Beleuchtungsfeld (FOI) so positioniert ist, dass es durch verschiedene Segmente (20) der Anordnung (12) von Fotodetektoren (14) an jeder diskreten Position detektiert wird,
**gekennzeichnet durch** Formen des Lichts von dem Lichtemitter (18) mittels einer Strahllenkungsvorrichtung (16) in einem horizontal länglichen Muster, wobei die Segmente (20) horizontal länglich sind und die diskreten Positionen in der Sequenz von diskreten Positionen vertikal angeordnet sind.

9. Verfahren nach Anspruch 8, des Weiteren umfassend das Einstellen des Richtens des Lichts von dem Lichtemitter (18) so, dass das Beleuchtungsfeld (FOI) so positioniert ist, dass es durch jeden Fotodetektor (14) mindestens einmal in der Sequenz detektiert wird.

10. Verfahren nach Anspruch 8, des Weiteren umfassend das Detektieren einer Szene von in dem Beleuchtungsfeld (FOI) reflektierten Licht mit jedem Segment (20) und das Zusammenfügen der Szenen von benachbarten der Segmente (20), um ein Vollbild zu bilden.

11. Verfahren nach Anspruch 8, des Weiteren umfassend das Richten des Beleuchtungsfeldes (FOI) so, dass es horizontal länglich ist, und das vertikale Einstellen des Beleuchtungsfeldes (FOI).

12. Verfahren nach Anspruch 8, des Weiteren umfassend das Überlappenlassen des ersten Segments (20) und des zweiten Segments (20).

13. Verfahren nach Anspruch 8, des Weiteren umfassend das Zusammenfügen einer durch das erste Segment (20) der Anordnung (12) von Fotodetektoren (14) detektierten Szene mit einer durch das zweite Segment (20) der Anordnung (12) von Fotodetektoren (14) detektierten Szene, um ein Vollbild zu bilden.

14. Verfahren nach Anspruch 8, des Weiteren umfassend das Aktivieren des ersten Segments der Anordnung von Fotodetektoren und das Deaktivieren des zweiten Segments der Anordnung von Fotodetektoren, wenn Licht von dem Lichtemitter in ein Beleuchtungsfeld emittiert wird, das so positioniert ist, dass es durch ein erstes Segment einer Anordnung von Fotodetektoren detektiert wird.

## Revendications

1. Système comprenant :
un agencement (12) de photodétecteurs (14) ;
un dispositif d'orientation de faisceau (16) ;
un émetteur de lumière (18) pointant vers le dispositif d'orientation de faisceau (16), dans lequel le dispositif d'orientation de faisceau (16) est conçu pour pointer la lumière provenant de l'émetteur de lumière (18) dans un champ d'éclairage (Field of Illumination, FOI) positionné pour être détecté par un segment (20) de l'agencement (12) de photodétecteurs (14), le segment (20) étant plus petit que l'agencement (12) ; et
un ordinateur (22) ayant un processeur (24) et une mémoire (26) stockant des instructions exécutables par le processeur (24) pour régler le pointage du dispositif d'orientation de faisceau (16) afin de déplacer le champ d'éclairage (FOI) par rapport à l'agencement (12) de photodétecteurs (14),
dans lequel la mémoire (26) stocke des instructions exécutables par le processeur (24) pour régler le pointage du dispositif d'orientation de faisceau (16) dans une séquence de positions discrètes et pour émettre de la lumière à partir de l'émetteur de lumière (18) à chaque position discrète, le champ d'éclairage (FOI) étant positionné pour être détecté par différents segments (20) de l'agencement (12) de photodétecteurs (14) à chaque position discrète et **caractérisé en ce que** le dispositif d'orientation de faisceau (16) est conçu pour mettre en forme la lumière provenant de l'émetteur de lumière (18) selon un motif allongé horizontalement, dans lequel les segments (20) sont allongés horizontalement et les positions discrètes dans la séquence de positions discrètes sont disposées verticalement.

2. Système selon la revendication 1, dans lequel la mémoire (26) stocke des instructions exécutables par le processeur (24) pour régler le pointage du dispositif d'orientation de faisceau (16) de sorte que le champ d'éclairage (FOI) est positionné pour être détecté par chaque photodétecteur (14) au moins une fois dans la séquence.

3. Système selon la revendication 1, dans lequel des segments adjacents parmi les segments (20) se chevauchent.

4. Système selon la revendication 2, dans lequel chaque segment (20) détecte une scène de lumière réfléchie dans le champ d'éclairage (FOI) et des scènes provenant de segments adjacents parmi les segments (20) sont assemblés pour former une trame.

5. Système selon la revendication 1, dans lequel la mémoire (26) stocke des instructions exécutables par le processeur (24) pour, à chaque position discrète de la séquence de positions discrètes, activer le segment (20) de l'agencement (12) de photodétecteurs (14) pour lequel le champ d'éclairage (FOI) est positionné pour être détecté par les photodétecteurs (14) restants de l'agencement (12) et désactiver ceux-ci.

6. Système selon la revendication 1, dans lequel l'agencement (12) est un premier agencement (12) et le système comprend en outre un second agencement (12) de photodétecteurs (14), dans lequel le premier agencement (12) et le second agencement (12) sont pointés dans différentes directions, le champ d'éclairage (FOI) étant positionné pour être détecté par un segment (20) du second agencement (12) de photodétecteurs (14).

7. Système selon la revendication 1, dans lequel le dispositif d'orientation de faisceau (16) comporte un miroir micro-électromécanique et/ou un affichage à cristaux liquides.

8. Procédé comprenant de :
générer de la lumière avec un émetteur de lumière (18) ;
pointer la lumière provenant de l'émetteur de lumière (18) dans un champ d'éclairage (FOI) positionné pour être détecté par un premier segment (20) d'un agencement (12) de photodétecteurs (14) d'un photodétecteur (14), le premier segment (20) étant plus petit que l'agencement (12) ;
détecter la lumière réfléchie dans le champ d'éclairage (FOI) avec les photodétecteurs (14) dans le premier segment (20) de l'agencement (12) de photodétecteurs (14);
régler le pointage de la lumière provenant de l'émetteur de lumière (18) pour déplacer le champ d'éclairage (FOI) de manière à le positionner pour être détecté par un second segment (20) de l'agencement (12) de photodétecteurs (14), le second segment (20) étant plus petit que l'agencement (12) ;
détecter la lumière réfléchie dans le champ d'éclairage (FOI) avec les photodétecteurs (14) dans le second segment (20) de l'agencement (12) de photodétecteurs (14) ; et
régler le pointage de la lumière provenant de l'émetteur de lumière (18) dans une séquence de positions discrètes et émettre de la lumière à partir de l'émetteur de lumière (18) à chaque position discrète, le champ d'éclairage (FOI) étant positionné pour être détecté par différents segments (20) de l'agencement (12) de photodétecteurs (14) à chaque position discrète,
**caractérisé par** la mise en forme de la lumière provenant de l'émetteur de lumière (18) au moyen d'un dispositif d'orientation de faisceau (16), selon un motif allongé horizontalement, dans lequel les segments (20) sont allongés horizontalement et les positions discrètes dans la séquence des positions discrètes sont disposées verticalement.

9. Procédé selon la revendication 8, comprenant en outre de régler le pointage de la lumière provenant de l'émetteur de lumière (18) de sorte que le champ d'éclairage (FOI) est positionné pour être détecté par chaque photodétecteur (14) au moins une fois dans la séquence.

10. Procédé selon la revendication 8, comprenant en outre de détecter une scène de lumière réfléchie dans le champ d'éclairage (FOI) avec chaque segment (20) et d'assembler les scènes provenant de segments adjacents parmi les segments (20) afin de former une trame.

11. Procédé selon la revendication 8, comprenant en outre de pointer le champ d'éclairage (FOI) pour qu'il soit allongé horizontalement et de régler le champ d'éclairage (FOI) verticalement.

12. Procédé selon la revendication 8, comprenant en outre de faire chevaucher le premier segment (20) et le second segment (20).

13. Procédé selon la revendication 8, comprenant en outre d'assembler une scène détectée par le premier segment (20) de l'agencement (12) de photodétecteurs (14) et une scène détectée par le second segment (20) de l'agencement (12) de photodétecteurs (14) afin de former une trame.

14. Procédé selon la revendication 8, comprenant en outre d'activer le premier segment de l'agencement de photodétecteurs et de désactiver le second segment de l'agencement de photodétecteurs lorsque la lumière provenant de l'émetteur de lumière est émise dans un champ d'éclairage positionné pour être détecté par un premier segment d'un agencement de photodétecteurs.
